# EUROPEAN PATENT SPECIFICATION

(11) **EP 3 190 350 B1**
(45) Date of publication and mention of the grant of the patent: **27.11.2024**
(21) Application number: 17150328.7
(22) Date of filing: 05.01.2017
(51) Int. Cl.: F24F 12/00, F24F 13/02

(54) **VENTILATION DEVICE**
VENTILATIONSVORRICHTUNG
DISPOSITIF DE VENTILATION

(30) Priority: 11.01.2016 BE 201605014
(43) Date of publication of application: 12.07.2017
(73) Proprietor: Renson NV, 8790 Waregem (BE)
(72) Inventor: LAMBRECHT, Filip Noël Alain Joseph, 9700 OUDENAARDE (ENAME) (BE)
(74) Representative: Hostens, Veerle

(56) References cited:
- EP-A2- 2 664 865
- WO-A1-2015/163839
- DE-U1- 202010 010 605
- DE-U1- 202010 010 605
- DE-U1- 202012 012 312
- US-A- 5 372 182

## Description

This invention relates to a ventilation device, comprising a housing having at least one inlet and at least one outlet and at least two ventilation units, which latter each comprise at least one regenerator and at least one air flow generator, for generating a reversible air flow through the ventilation unit and its said regenerator, and are each fittable in the housing, joining a said inlet and a said outlet, for the flow of air through this ventilation unit and through the housing via this inlet and this outlet.

Such ventilation devices are used in buildings in which ventilation with decentralized energy recovery is desired. In a room which is to be ventilated, such a ventilation device is built into a wall between this room and an external environment in order to be able to ensure the flow of air through the ventilation device in two directions. Via the one ventilation unit, air is drawn out of the external environment into the room, whilst via the other one air is drawn off from the room into the external environment. In this way, the balance between drawn-in and drawn-off air in the room is constantly maintained. In the one ventilation unit, when air is drawn off from the room, this warmer interior air which is drawn off heats the regenerator. In the other ventilation unit, the colder drawn-in exterior air extracts heat from the regenerator, so that this exterior air is heated before it finds its way into the room. After a certain time, the air flow through the two ventilation units is changed over, so that the meanwhile heated regenerator of one ventilation unit can deliver heat to drawn-in exterior air and the meanwhile cooled regenerator of the other ventilation unit is reheated by the drawn-off interior air.

The moment of reversal of the air flow can be determined, for example, as a function of the temperature of one or more regenerators or the temperature of the drawn-in or the drawn-off air, or can be fixedly chosen in time, etc. The inlet and outlet here constantly change function, wherein air is let in and/or let out via the inlet and air is let out and/or let in via the outlet.

The reversibility of the air flow can be ensured, for example, by providing one ventilator per direction, or by providing a ventilator which can turn in two directions for generation of an air flow in each of the two directions, or by providing a ventilator which can be rotated fully though 180° in the ventilation device, such as is described, for example, in WO 2012/155913 A1.

A ventilation device having a housing with two ventilation units is known, for example, from WO 2013/017378 A1. This ventilation device comprises a built-in profile as the housing, in which two ventilation units are arranged. In the housing is respectively provided an inlet and an outlet per ventilation unit. Each ventilation unit comprises a ventilator and a heat exchanger. With the ventilator, the flow of air between the corresponding inlet and outlet and through the heat exchanger can be realized bidirectionally.

A drawback of the known ventilation devices of this type is that, both in terms of technical maintenance and in terms of cleaning of the parts, these parts are difficult to access and the removal of the ventilation devices is very laborious.

Often the different ventilation units are built directly into the wall, so that they are not readily removable, and this often at poorly accessible places. This is e.g. the case in the ventilation device from US 5,372,182 A. EP 2 664 865 disclosing another ventilation device having the same disadvantages.

In the ventilation device from WO 2013/017378 A1, the ventilation units are accommodated in a housing, so that the parts thereof are more easily removable, but this removal, with a view to cleaning of the parts, remains very laborious.

The object of this invention is to provide a ventilation device according to the introductory part of the first claim which is more user-friendly in terms of technical maintenance and cleaning and wherein it is prevented that air which is blown out by the one ventilation unit is drawn in by the other ventilation unit.

This object of the invention is achieved by providing a ventilation device, comprising a housing having at least one inlet and at least one outlet and at least two ventilation units, which latter each comprise at least one regenerator and at least one air flow generator, for generating a reversible air flow through the ventilation unit and its said regenerator, and are each fittable in the housing, joining a said inlet and a said outlet, for the flow of air through this ventilation unit and through the housing via this inlet and this outlet, wherein each ventilation unit is of modular construction and, to this end, comprises an air flow generator module, comprising the said air flow generator, and comprises a regenerator module, comprising the said regenerator, wherein the air flow generator module and the regenerator module are fittable, via an access opening to the housing, separate from each other in this housing and, in the mounted state, are arranged loose in the housing and wherein the ventilation device comprises an intermediate element, which is fittable in the housing via the access opening and, in the mounted state, is arranged between the two said ventilation units of the ventilation device, such that it is prevented that air which is blown out by the one ventilation unit is drawn in by the other ventilation unit.

The air flow generator module and the regenerator module may here be mutually coupled in the housing itself with the aid of easily releasable fastening means, such as, for example, with the aid of a clip.

By constructing the ventilation units modularly with an air flow generator module and a regenerator module which are fittable, via an access opening to the housing, separate from each other in this housing, it is ensured that the different parts of the ventilation units can be comfortably brought into and out of the housing. By arranging these loose in the housing, it is ensured that no fastening means need to be released at poorly accessible places.

With the intermediate element, the ventilation units can in the assembly process be mounted in a simple manner at a distance apart, so that a situation in which air which is blown out by the one ventilation unit would be drawn in by the other ventilation unit can be avoided with greater certainty.

The housing is preferably of substantially bar-shaped construction, but can also assume other shapes. A bar-shaped housing of this type can be, for example, of elongated construction, in such dimensions that it can be easily mounted at the top of a frame or a door or at the bottom of a frame, or to the left or right of a frame or a door.

A ventilation device according to this invention can comprise per ventilation unit a separate inlet and a separate outlet. In terms of production, the housing is preferably provided, however, with one inlet and one outlet. At least one insert element may then be provided in order to then split this inlet and/or outlet into sub-inlets and/or sub-outlets per ventilation unit.

Different sorts of regenerators are suitable for accommodation in such a ventilation device. This regenerator can be constructed, for example, of a number of parallelly arranged plastics or metal plates, through which the air flow is conducted, or can be realized as a ceramic element with a metal oxide component, or can be made of steel wool or realized as perforated steel plates, etc.

It is possible to arrange in a ventilation unit of a ventilation device according to this invention, on both sides of the regenerator module, an air flow generator module, which latter modules can each in opposite direction ensure the flow of air. It is also possible that each ventilation unit comprises one air flow generator module, which, for each of the two flow directions, comprises a separate air flow generator. Preferably, each ventilation unit comprises, however, only one air flow generator module, which comprises one single air flow generator, with which air flow can be ensured in both directions, and this preferably by arranging the air flow generator rotatably in the air flow generator module, this preferably through 180°.

Preferably, the ventilation units of a ventilation device according to this invention are fittable in the housing such that they are mutually exchangeable. In this way, the parts of these ventilation units can be mounted still more comfortably.

The housing of a ventilation device according to this invention preferably offers room for at least four ventilation units. Still more preferredly, it offers room for 6, 8, 12 or more ventilation units. With an even number of ventilation units, the balance between drawn-in and drawn-off air can be maintained in a simple manner.

By offering room to four or more ventilation units, different ventilation devices, with which different ventilation capacities can be ensured, can be easily realized with a same housing. Depending on the desired ventilation capacity, a greater or lesser number of ventilation units can be fitted in this housing. For one and the same dwelling, the same housings can then, for example, be provided all in all uniformly for different rooms. Depending on the necessary ventilation capacity for this room, a greater or lesser number of ventilation units are then fitted in this housing. It is also possible to thereby adapt the ventilation device to ventilation requirements which change over time. If initially a limited ventilation capacity is required and after a certain time a higher ventilation capacity is required, then additional ventilation units can in this way be easily fitted in the housing.

The intermediate element can likewise serve as an aforementioned insert element for splitting the inlet and/or the outlet into sub-inlets and/or sub-outlets.

The intermediate element may further also serve as a partition in order to help ensure the rigidity of the housing in between the ends of the housing.

If such a ventilation device comprises an even number of the said ventilation units, then, in the mounted state, preferably one half of these ventilation units is arranged on a first side of the intermediate element and the other half of these ventilation units on a second side of the intermediate element, opposite to the first side. By making the ventilation units on one side then draw in air, whilst on the other side they are made to draw off air, and vice versa, then the balance between drawn-in and drawn-off air can be easily ensured, wherein air which is blown out by the one ventilation units is as far as possible prevented from being drawn in by the other ventilation units.

A ventilation device according to this invention preferably also comprises at least one end element, which is fittable in the housing via the access opening and, in the mounted state, is arranged on one and the same side of all ventilation units in the ventilation device. Such end elements help to position the different modules in a simple manner in the housing.

Any said intermediate elements and/or end elements of a ventilation device according to this invention are preferably insulatingly constructed in order to thereby insulate the room in the housing next to the ventilation units as well as possible. Preferably, the complete room in the housing next to the ventilation units is insulated with the aid of one or more such insulating intermediate elements and/or end elements.

The housing of a particularly preferred ventilation device according to this invention comprises a first opening, and a second opening, wherein the first and the second opening, according to choice, can serve as the said access opening.

Depending on the placement of the ventilation device, the position of insertion or withdrawal of the different modules can more advantageously be realized via the one or via the other opening. In this way, the same ventilation devices can be installed at different locations without loss of the advantages in terms of assembly and removal.

Still more preferredly, the first opening here offers access to the housing via a first direction, and the second opening offers access to the housing via a second direction, differing from the first direction.

In this way, the different modules, depending on the marginal conditions, can be fitted in the housing via the one direction or via the other direction, according to choice.

A ventilation device according to this invention, having a said first opening and a said second opening, preferably also comprises cover elements for the respective at least partial closure of the first opening and the second opening.

Preferably, these cover elements are fittable in a mutually exchangeable manner in front of the first opening and the second opening in order to at least partially close off these openings.

A ventilation device according to this invention preferredly comprises a cover element for the partial closure of the access opening, so that, following fitting of the cover element in front of the access opening, the liberated part of the access opening forms the outlet. Thus, during production, only one opening needs to be realized, which opening, in the non-closed-off state, can serve as an access opening and, in the partially closed-off state, forms the outlet.

Preferably, such a ventilation device comprises a plurality of such cover elements, which are fittable in a mutually exchangeable manner in front of the access opening in order to partially close off this access opening, so that, following fitting of one of these cover elements in front of the access opening, the liberated part of the access opening forms the outlet, wherein the liberated parts, given the different cover elements, occupy differing positions.

In this way, in a same ventilation device at different places, by the simple fitting of a different cover element, an outlet can be realized at another position, so that the position of this outlet can be chosen in dependence on the marginal conditions.

The housing of a ventilation device according to this invention is further preferably at least partially constructed of profiles.

The possible said cover elements of a ventilation device according to this invention are preferably also realized as profiles.

If a ventilation device according to this invention comprises one or more said cover elements, then preferably at least one of these cover elements is articulately arranged in the housing. Alternatively or additionally, one or more cover elements can be received in the housing by click fastening, or one or more cover elements can be arranged displaceably in the housing, etc.

This invention is now more closely explained with reference to the hereinafter following detailed description of a preferred ventilation device according to this invention. The aim of this description is to provide solely illustrative examples and to indicate further advantages and particularities of this invention, and can thus not be interpreted as a limitation of the field of application of the invention or of the patent rights claimed in the claims.

In this detailed description, reference is made by means of reference numerals to the hereto appended drawings, wherein in
- Figure 1 an embodiment of a ventilation device according to this invention, having two openings which can serve as an access opening and having two cover elements built into a wall, is depicted in cross section;
- Figure 2 the embodiment of a ventilation device from figure 1 is depicted in cross section, wherein one of the cover elements is replaced by an alternative cover element, and wherein this ventilation device is built into another wall, connecting to a ceiling;
- Figure 3 the embodiment of a ventilation device from Figure 1 is depicted in cross section, wherein one of the cover elements is replaced by an alternative cover element, and wherein this ventilation device is built into another wall, connecting to a ceiling;
- Figures 4 to 9 is shown in schematic representation how different ventilation units, intermediate elements and end elements can be disposed in mutually adjoining arrangement in a housing of a ventilation device according to this invention.

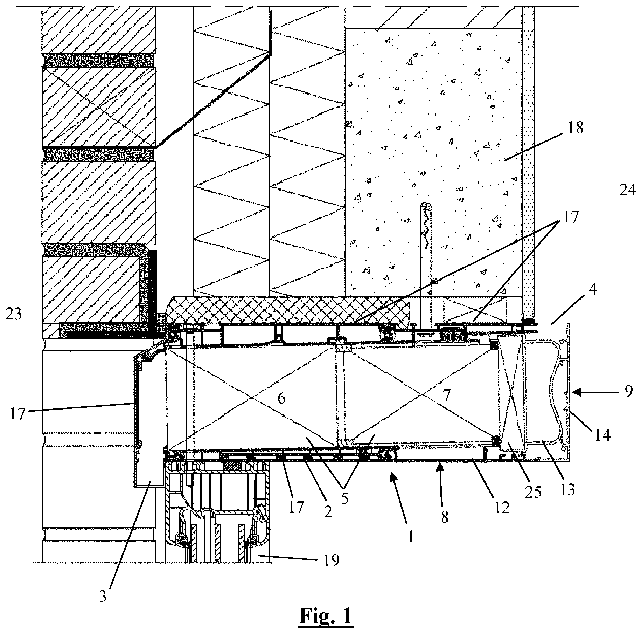

The ventilation device (1) depicted in Figures 1 to 3 is respectively built into a wall (18) on top of a frame (19), in order to ensure the flow of air through this wall (18) between an external environment (23) and an interior (24).

In Figure 1, the ventilation device (1) connects to an inner side of the wall (18).

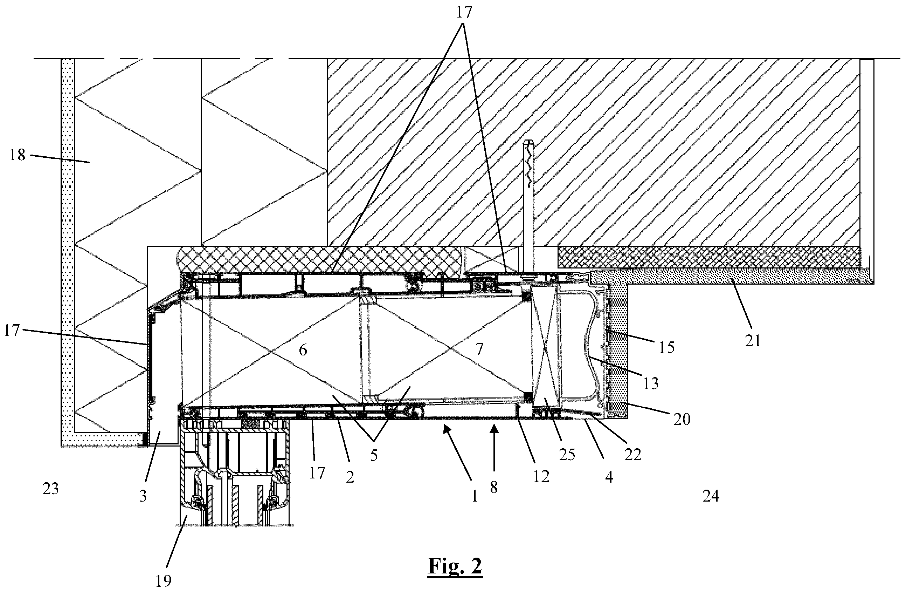

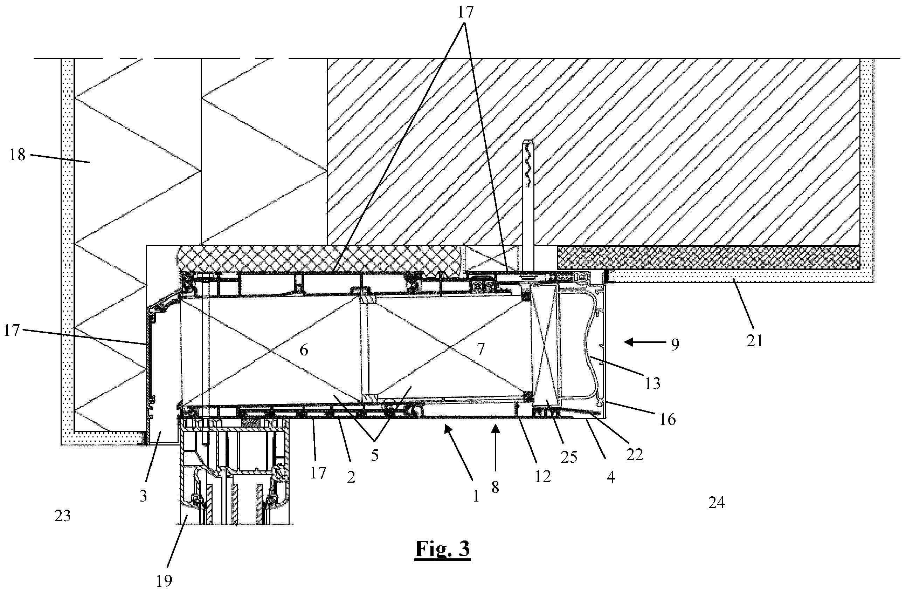

In Figures 2 and 3, the ventilation device (1) connects to a ceiling (21), wherein the ventilation device (1) is in Figure 2 plastered (20) along with the ceiling (21).

This ventilation device (1) could also be installed on top of a door. Alternatively, according to the same principles, ventilation devices (1) which can be installed, for example, to the left or right of a frame or a door, or which can stand detached from a frame or a door, can also be developed.

The ventilation device (1) respectively comprises a housing (2) having an inlet (3) connecting to the external environment (23) and an outlet (4) connecting to the interior (24). In addition, it becomes clear that both parts of this inlet (3) and parts of this outlet (4) alternately serve as an inlet through which air is drawn in or as an outlet through which air is blown off.

The housing (2) is of substantially bar-shaped construction and extends elongatedly on top of the frame (19), wherein the length of this housing (2) preferably tallies with the width of the frame over which it is arranged.

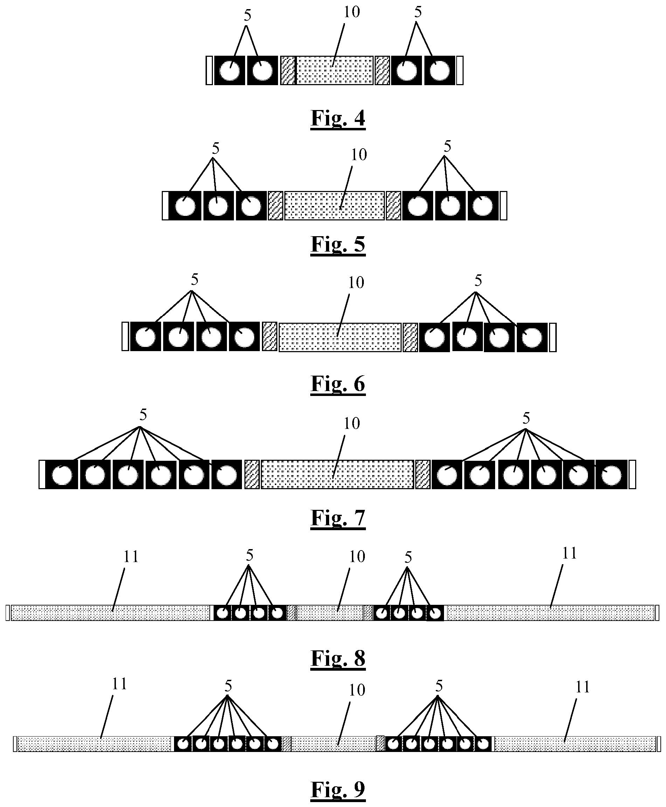

In the housing (2) are respectively accommodated a plurality of ventilation units (5), wherein in the depicted cross sections respectively only one ventilation unit (5) is schematically visible. Furthermore, in the discussion of Figures 4 to 9, it is illustrated how the ventilation units (5) can be arranged spread over the length of the housing (2).

Each ventilation unit (5) comprises a regenerator module (6) and an air flow generator module (7).

The regenerator module (6) comprises a regenerator (6), which can be realized, for example, as a set of mutually parallelly arranged plastics plates, through which the air can flow.

The air flow generator module (7) comprises a ventilator (7), which can be rotated through 180° between a first position and a second position. In the first position, the ventilator (7) draws air out of the external environment (23) via the inlet (3), through the ventilation unit (5) and the regenerator (6), so as to blow it into the interior (24) via the outlet (4). In the second position, the ventilator (7) draws air out of the interior (24) via the outlet (4), through the ventilation unit (5), so as to blow it into the external environment (23) via the regenerator (6) and the inlet (3).

In the figures, the regenerator module (6) and the air flow generator module (7) are respectively arranged one behind the other between the inlet (3) and the outlet (4). In an alternative embodiment, these could also be arranged side by side, as long as it is ensured that the air flow generated by the air flow generator module (7) is directed also through the regenerator (6).

In the first position of the ventilator (7), the regenerator (6) delivers heat to the colder exterior air. In the second position of the ventilator (7), the regenerator (6) is heated by the warmer interior air. In the ventilation device (1), it is respectively ensured that, whilst the one ventilation unit (5) operates in the first position, there is another ventilation unit (5), which operates in the second position, and vice versa. In this way, it is constantly ensured that there is a balance between drawn-in air from the interior and air blown into the interior. In this case, there are then always parts of the inlet (3) which act as an inlet and parts which act as an outlet, just as, correspondingly, there are always parts of the outlet (4) which act as an outlet and parts which act as an inlet. After a certain time, the positions of the ventilators (7) are respectively changed over, so that meanwhile heated regenerators give up their heat and recooled regenerators can be reheated.

The housing (2) is constructed of a plurality of profiles (17). At the bottom, an opening (8) of the housing (2) is at least partially closed off with the aid of a cover profile (12). Laterally to the interior (24), an opening (9) of the housing (2) is at least partially closed off with cover profiles (14, 15, 16).

The bottommost cover profile (12) is articulately fastened to the housing (2), so that it can be swung between an open position, in which it liberates the opening (8) at the bottom of the housing (2), and a closed position, in which it at least partially closes off the opening (8) at the bottom of the housing (2).

The lateral cover profiles (14, 15, 16) can be clicked in place on the housing (2) with the aid of fastening clips (13), so that the lateral opening (9) can be freed by unclicking these cover profiles (14, 15, 16) and removing the fastening clips (13).

In Figures 1 to 3, the outermost lateral cover profiles (14, 15, 16) respectively differ from one another. Depending on the marginal conditions, a choice can be made as to which outermost lateral cover profile (14, 15, 16) is the most suitable.

In Figure 1, the bottommost cover profile (12) completely closes off the opening (8) at the bottom of the housing (2). The lateral cover profiles (13, 14) close off the opening (9) laterally from the housing (2), but leave an opening (4) at the top of the housing (2) free, which latter opening forms the outlet (4) of the ventilation device (1).

In Figures 2 and 3, the bottommost cover profile (12) partially closes off the opening (8) at the bottom of the housing (2). The lateral cover profiles (13, 15, 16) close off the opening (9) laterally from the housing (2). The bottommost cover profile (12) and the lateral cover profiles (13, 15, 16) together leave free at the bottom an opening (4), which forms the outlet (4) of the ventilation device (1). In Figure 2, the outermost lateral cover profile (15) is modified with an outermost profiling to enable a plaster layer (20) to be easily applied hereto.

The regenerator module (6) and the air flow generator module (7) can respectively be fitted as modules (6, 7) separate from each other in the housing (2). In the mounted state, these modules (6, 7) are arranged loose in the housing (2). However, these may be mutually coupled in the housing (2) itself with the aid of easily releasable fastening means, such as for example with the aid of a clip.

In Figures 1 and 3, the opening (8) at the bottom of the housing (2) can be freed according to choice by swinging open the bottommost cover profile (12), or the opening (9) laterally from the housing (2) can be freed by unclicking the lateral cover profiles (14, 16) in order thus to free an access opening (8 or 9) so as to fit the modules (6, 7) herethrough, i.e. via the bottom side, into the housing (2), or pull it out of this housing (2), i.e. laterally. If the modules (6, 7) need to be pulled laterally out of the housing (2), then the cover profile (14, 16) needs first to be unclicked, the fastening clips (13) need to be released, and the filter (25) needs to be removed.

In Figure 2, the outermost lateral cover profile (15) is plastered, so that, following assembly, it is no longer easily removable. Following assembly, the bottommost cover profile (12) can in this case still be easily swung open in order to free the opening (8) at the bottom of the housing (2) so as to pull the modules (6, 7) out of the housing (2) at the bottom.

In addition to the said regenerator module (6) and the said air flow generator module (7), still further modules can be accommodated in the housing (2), such as the said filter (25), a possible actuation module, etc.

In Figures 4 to 9, some possible arrangements of ventilation units (5) in such a ventilation device (1) are illustrated schematically.

In Figures 4 to 7, respectively 4, 6, 8 and 12 ventilation units (5) are included in the arrangement. Between the ventilation units (5) is respectively fitted an insulating intermediate element (10) made of expanded polypropylene. This insulating intermediate element (10) can also be produced from other material. Respectively, a same number of ventilation units (5) is arranged on the one side of the insulating intermediate element (10) as on the other side. In this way, all ventilation units (5) on the one side can be made to generate an air flow in the same direction, whilst the ventilation units (5) on the other side can be made to generate an opposite air flow, and both, after a certain time, changed over. By virtue of the intermediate element (10), a situation in which air which is blown off by the one ventilation units (5) would be drawn in by the other ventilation units (5) is as far as possible avoided. The dimensions of the intermediate element (10) are preferably determined as a function hereof. Since an equal number of ventilation units (5) is arranged on both sides of the intermediate element (10), the balance between air drawn off in the interior (24) and air blown into this interior (24) can be maintained.

As illustrated in Figures 8 and 9, the housing (2) of the ventilation device preferably has a length which makes it possible to vary the number of herein fitted ventilation units (5) in dependence on the requirements or wishes. Since these ventilation units (5) can be fitted in modular arrangement loose in this housing (2), it is then easily possible to play with their position, wherein the residual space in the housing (2) can be easily filled with the aid of the said intermediate element (10) and further insulating end elements (11). These end elements (11) can likewise be produced from expanded polypropylene or another insulating material.

## Claims

1. Ventilation device (1), comprising a housing (2) having at least one inlet (3) and at least one outlet (4) and at least two ventilation units (5), which latter each comprise at least one regenerator (6) and at least one air flow generator (7), for generating a reversible air flow through the ventilation unit (5) and its said regenerator (6), and are each fittable in the housing (2), joining a said inlet (3) and a said outlet (4), for the flow of air through this ventilation unit (5) and through the housing (2) via this inlet (3) and this outlet (4), whereby each ventilation unit (5) is of modular construction and, to this end, comprises an air flow generator module (7), comprising the said air flow generator (7), and comprises a regenerator module (6), comprising the said regenerator (6), wherein the air flow generator module (7) and the regenerator module (6) are fittable, via an access opening (8, 9) to the housing (2), separate from each other in this housing (2) and, in the mounted state, are arranged loose in the housing (2) and in that the ventilation device (1) comprises an intermediate element (10), which is fittable in the housing (2) via the access opening (8, 9) and, in the mounted state, is arranged between the two said ventilation units (5) of the ventilation device (1), such that it is prevented that air which is blown out by the one ventilation unit is drawn in by the other ventilation unit.

2. Ventilation device (1) according to Claim 1, **characterized in that** the ventilation units (5) are fittable in the housing (2) such that they are mutually exchangeable.

3. Ventilation device (1) according to one of the preceding claims, **characterized in that** the housing (2) offers room for at least four ventilation units (5).

4. Ventilation device (1) according to one of the preceding claims, **characterized in that** the ventilation device (1) comprises an even number of said ventilation units (5), and **in that**, in the mounted state, one half of these ventilation units (5) is arranged on a first side of the intermediate element (10) and the other half of these ventilation units (5) are arranged on a second side of the intermediate element (10), opposite to the first side.

5. Ventilation device (1) according to one of the preceding claims, **characterized in that** the ventilation device (1) comprises at least one end element (11), which are fittable in the housing (2) via the access opening (8, 9) and, in the mounted state, is arranged on one and the same side of all ventilation units (5) in the ventilation device (1).

6. Ventilation device (1) according to one the preceding claims , **characterized in that** the intermediate element (10) and/or the end element (11) is/are insulatingly constructed.

7. Ventilation device (1) according to one of the preceding claims, **characterized in that** the housing (2) comprises a first opening (8), and comprises a second opening (9), wherein the first opening (8) and the second opening (9), according to choice, can serve as the said access opening (8).

8. Ventilation device (1) according to Claim 7, **characterized in that** the first opening (8) offers access to the housing (2) via a first direction, and **in that** the second opening (9) offers access to the housing (2) via a second direction, differing from the first direction.

9. Ventilation device (1) according to Claim 7 or 8, **characterized in that** the ventilation device (1) comprises cover elements (12, 14, 15, 16) for the respective at least partial closure of the first opening (8) and the second opening (9).

10. Ventilation device (1) according to Claim 9, **characterized in that** the cover elements (12, 14, 15, 16) are fittable in a mutually exchangeable manner in front of the first opening (8) and the second opening (9) in order to at least partially close off these openings (8, 9).

11. Ventilation device (1) according to one of the preceding claims, **characterized in that** the ventilation device (1) comprises a cover element (14, 15, 16) for the partial closure of the access opening (9), so that, following fitting of the cover element (14, 15, 16) in front of the access opening (9), the liberated part of the access opening (9) forms the outlet (4).

12. Ventilation device according to Claim 11, **characterized in that** the ventilation device comprises a plurality of cover elements (14, 15, 16), which are fitted in a mutually exchangeable manner in front of the access opening (9) in order to at least partially close off this access opening (9), so that, following fitting of one of these cover elements (14, 15, 16) in front of the access opening (9), the liberated part of the access opening (9) forms the outlet (4), wherein the liberated parts (4), in respect of the different cover elements (14, 15, 16), occupy differing positions.

13. Ventilation device (1) according to one of Claims 9 to 12, **characterized in that** at least one cover element (12) is articulately arranged in the housing (2).

14. Ventilation device according to one of the preceding claims, **characterized in that** the housing (2) is at least partially constructed of profiles (17).

15. Ventilation device (1) according to one of Claims 9 to 13 and Claim 14, **characterized in that** the cover elements (12, 14, 15, 16) are realized as profiles (12, 14, 15, 16).

## Patentansprüche

1. Lüftungsvorrichtung (1), umfassend ein Gehäuse (2) mit mindestens einem Einlass (3) und mindestens einem Auslass (4), und mindestens zwei Lüftungseinheiten (5), die jeweils mindestens einen Regenerator (6) und mindestens einen Luftströmungsgenerator (7) zur Erzeugung einer reversiblen Luftströmung durch die Lüftungseinheit (5) und ihren Regenerator (6) umfassen und die jeweils in dem Gehäuse (2) anbringbar sind und den Einlass (3) mit dem Auslass (4) verbinden, so dass Luft über diesen Einlass (3) und diesen Auslass (4) durch diese Lüftungseinheit (5) und durch das Gehäuse (2) strömen kann, wobei jede Lüftungseinheit (5) ein modulare Bauweise hat und dazu ein Luftströmungsgeneratormodul (7), das den Luftströmungsgenerator (7) umfasst, und ein Regeneratormodul (6) umfasst, das den Regenerator (6) umfasst, wobei das Luftströmungsgeneratormodul (7) und das Regeneratormodul (6) über eine Zugangsöffnung (8, 9) zu dem Gehäuse (2) getrennt voneinander in diesem Gehäuse (2) anbringbar sind und im montierten Zustand lose in dem Gehäuse (2) angeordnet sind, und dass die Lüftungsvorrichtung (1) ein Zwischenelement (10) umfasst, das über die Zugangsöffnung (8, 9) in dem Gehäuse (2) anbringbar ist und im montierten Zustand zwischen den beiden Lüftungseinheiten (5) der Lüftungsvorrichtung (1) angeordnet ist, so dass verhindert wird, dass von der einen Lüftungseinheit ausgeblasene Luft durch die andere Lüftungseinheit eingesaugt wird.

2. Lüftungsvorrichtung (1) nach Anspruch 1, **dadurch gekennzeichnet, dass** die Lüftungseinheiten (5) so in dem Gehäuse (2) anbringbar sind, dass sie gegenseitig austauschbar sind.

3. Lüftungsvorrichtung (1) nach einem der vorhergehenden Ansprüche, **dadurch gekennzeichnet, dass** das Gehäuse (2) Platz für mindestens vier Lüftungseinheiten (5) bietet.

4. Lüftungsvorrichtung (1) nach einem der vorhergehenden Ansprüche, **dadurch gekennzeichnet, dass** die Lüftungsvorrichtung (1) eine gerade Zahl der Lüftungseinheiten (5) umfasst und dass im montierten Zustand eine Hälfte dieser Lüftungseinheiten (5) an einer ersten Seite des Zwischenelements (10) angeordnet ist und die andere Hälfte dieser Lüftungseinheiten (5) an einer der ersten Seite gegenüberliegenden zweiten Seite des Zwischenelements (10) angeordnet ist.

5. Lüftungsvorrichtung (1) nach einem der vorhergehenden Ansprüche, **dadurch gekennzeichnet, dass** die Lüftungsvorrichtung (1) mindestens ein Endelement (11) umfasst, das über eine Zugangsöffnung (8, 9) in dem Gehäuse (2) anbringbar ist und im montierten Zustand an ein und derselben Seite aller Lüftungseinheiten (5) in der Lüftungsvorrichtung (1) angeordnet ist.

6. Lüftungsvorrichtung (1) nach einem der vorhergehenden Ansprüche, **dadurch gekennzeichnet, dass** das Zwischenelement (10) und/oder das Endelement (11) isolierend konstruiert sind.

7. Lüftungsvorrichtung (1) nach einem der vorhergehenden Ansprüche, **dadurch gekennzeichnet, dass** das Gehäuse (2) eine erste Öffnung (8) und eine zweite Öffnung (9) umfasst, wobei die erste Öffnung (8) und die zweite Öffnung (9) nach Wahl als die Zugangsöffnung (8) dienen können.

8. Lüftungsvorrichtung (1) nach Anspruch 7, **dadurch gekennzeichnet, dass** die erste Öffnung (8) über eine erste Richtung Zugang zu dem Gehäuse (2) bietet und dass die zweite Öffnung (9) über eine von der ersten Richtung verschiedene zweite Richtung Zugang zu dem Gehäuse (2) bietet.

9. Lüftungsvorrichtung (1) nach Anspruch 7 oder 8, **dadurch gekennzeichnet, dass** die Lüftungsvorrichtung (1) Abdeckelemente (12, 14, 15, 16) für das jeweilige mindestens partielle Verschließen der ersten Öffnung (8) und der zweiten Öffnung (9) umfasst.

10. Lüftungsvorrichtung (1) nach Anspruch 9, **dadurch gekennzeichnet, dass** die Abdeckelemente (12, 14, 15, 16) auf gegenseitig austauschbare Weise vor der ersten Öffnung (8) und der zweiten Öffnung (9) anbringbar sind, um diese Öffnungen (8, 9) mindestens teilweise zu verschließen.

11. Lüftungsvorrichtung (1) nach einem der vorhergehenden Ansprüche, **dadurch gekennzeichnet, dass** die Lüftungsvorrichtung (1) ein Abdeckelement (14, 15, 16) für das partielle Verschließen der Zugangsöffnung (9) umfasst, so dass der freie Teil der Zugangsöffnung (9) nach dem Anbringen des Abdeckelements (14, 15, 16) vor der Zugangsöffnung (9) den Auslass (4) bildet.

12. Lüftungsvorrichtung (1) nach Anspruch 11, **dadurch gekennzeichnet, dass** die Lüftungsvorrichtung eine Vielzahl von Abdeckelementen (14, 15, 16) umfasst, die auf gegenseitig austauschbare Weise vor der Zugangsöffnung (9) angebracht sind, um diese Zugangsöffnung (9) mindestens teilweise zu verschließen, so dass der freie Teil der Zugangsöffnung (9) nach dem Anbringen eines dieser Abdeckelemente (14, 15, 16) vor der Zugangsöffnung (9) den Auslass (4) bildet, wobei die freien Teile (4) bezüglich der verschiedenen Abdeckelemente (14, 15, 16) verschiedene Positionen einnehmen.

13. Lüftungsvorrichtung (1) nach einem der Ansprüche 9 bis 12, **dadurch gekennzeichnet, dass** mindestens ein Abdeckelement (12) gelenkig in dem Gehäuse (2) angeordnet ist.

14. Lüftungsvorrichtung nach einem der vorhergehenden Ansprüche, **dadurch gekennzeichnet, dass** das Gehäuse (2) mindestens teilweise aus Profilen (17) konstruiert ist.

15. Lüftungsvorrichtung (1) nach einem der Ansprüche 9 bis 13 und Anspruch 14, **dadurch gekennzeichnet, dass** die Abdeckelemente (12, 14, 15, 16) als Profile (12, 14, 15, 16) ausgeführt sind.

## Revendications

1. Dispositif de ventilation (1), comprenant un boîtier (2) ayant au moins une entrée (3) et au moins une sortie (4) et au moins deux unités de ventilation (5), ces dernières comprenant chacune au moins un régénérateur (6) et au moins un générateur d'écoulement d'air (7), pour générer un écoulement d'air réversible à travers l'unité de ventilation (5) et son dit régénérateur (6), et pouvant être chacune placées dans le boîtier (2), réunissant une dite entrée (3) et une dite sortie (4), pour l'écoulement d'air à travers cette unité de ventilation (5) et à travers le boîtier (2) via cette entrée (3) et cette sortie (4), grâce à quoi chaque unité de ventilation (5) a une construction modulaire et, à cette fin, comprend un module de générateur d'écoulement d'air (7), comprenant ledit générateur d'écoulement d'air (7), et comprend un module de régénérateur (6), comprenant ledit régénérateur (6), le module de générateur d'écoulement d'air (7) et le module de régénérateur (6) pouvant être placés, via une ouverture d'accès (8, 9) sur le boîtier (2), séparés l'un de l'autre dans ce boîtier (2) et, à l'état monté, sont agencés avec du jeu dans le boîtier (2) et en ce que le dispositif de ventilation (1) comprend un élément intermédiaire (10), qui peut être placé dans le boîtier (2) via l'ouverture d'accès (8, 9) et, à l'état monté, est agencé entre les deux dites unités de ventilation (5) du dispositif de ventilation (1), de sorte à éviter que l'air qui est expulsé par ladite unité de ventilation ne soit aspiré par l'autre unité de ventilation.

2. Dispositif de ventilation (1) selon la revendication 1, **caractérisé en ce que** les unités de ventilation (5) peuvent être placées dans le boîtier (2) de sorte qu'elles sont interchangeables.

3. Dispositif de ventilation (1) selon l'une des revendications précédentes, **caractérisé en ce que** le boîtier (2) a de la place pour au moins quatre unités de ventilation (5).

4. Dispositif de ventilation (1) selon l'une des revendications précédentes, **caractérisé en ce que** le dispositif de ventilation (1) comprend un nombre pair desdites unités de ventilation (5), et **en ce que**, à l'état monté, la moitié de ces unités de ventilation (5) est agencée d'un premier côté de l'élément intermédiaire (10) et l'autre moitié de ces unités de ventilation (5) est agencée d'un deuxième côté de l'élément intermédiaire (10), à l'opposé du premier côté.

5. Dispositif de ventilation (1) selon l'une des revendications précédentes, **caractérisé en ce que** le dispositif de ventilation (1) comprend au moins un élément d'extrémité (11), qui peut être placé dans le boîtier (2) via l'ouverture d'accès (8, 9) et, à l'état monté, est agencé d'un seul et même côté de l'ensemble des unités de ventilation (5) dans le dispositif de ventilation (1).

6. Dispositif de ventilation (1) selon l'une des revendications précédentes, **caractérisé en ce que** l'élément intermédiaire (10) et/ou l'élément d'extrémité (11) sont/est construits/construit de façon isolante.

7. Dispositif de ventilation (1) selon l'une des revendications précédentes, **caractérisé en ce que** le boîtier (2) comprend une première ouverture (8), et comprend une deuxième ouverture (9), la première ouverture (8) et la deuxième ouverture (9) pouvant, au choix, jouer le rôle de ladite ouverture d'accès (8).

8. Dispositif de ventilation (1) selon la revendication 7, **caractérisé en ce que** la première ouverture (8) donne accès au boîtier (2) via une première direction, et **en ce que** la deuxième ouverture (9) donne accès au boîtier (2) via une deuxième direction, différente de la première direction.

9. Dispositif de ventilation (1) selon la revendication 7 ou 8, **caractérisé en ce que** le dispositif de ventilation (1) comprend des éléments couvercles (12, 14, 15, 16) pour la fermeture respective au moins partielle de la première ouverture (8) et de la deuxième ouverture (9).

10. Dispositif de ventilation (1) selon la revendication 9, **caractérisé en ce que** les éléments couvercles (12, 14, 15, 16) peuvent être placés de manière interchangeable devant la première ouverture (8) et la deuxième ouverture (9) afin de fermer au moins partiellement ces ouvertures (8, 9).

11. Dispositif de ventilation (1) selon l'une des revendications précédentes, **caractérisé en ce que** dispositif de ventilation (1) comprend un élément couvercle (14, 15, 16) pour la fermeture partielle de l'ouverture d'accès (9), de sorte que, après avoir placé l'élément couvercle (14, 15, 16) devant l'ouverture d'accès (9), la partie libérée de l'ouverture d'accès (9) forme la sortie (4).

12. Dispositif de ventilation (1) selon la revendication 11, **caractérisé en ce que** le dispositif de ventilation comprend une pluralité d'éléments couvercles (14, 15, 16), qui sont placés de manière interchangeable devant l'ouverture d'accès (9) afin de fermer au moins partiellement l'ouverture d'accès (9), de sorte que, après avoir placé l'un de ces éléments couvercles (14, 15, 16) devant l'ouverture d'accès (9), la partie libérée de l'ouverture d'accès (9) forme la sortie (4), les parties libérées (4) occupant, par rapport aux différents éléments couvercles (14, 15, 16), différentes positions.

13. Dispositif de ventilation (1) selon l'une des revendications 9 à 12, **caractérisé en ce qu'**au moins un élément couvercle (12) est agencé de façon articulée dans le boîtier (2).

14. Dispositif de ventilation (1) selon l'une des revendications précédentes, **caractérisé en ce que** le boîtier (2) est au moins partiellement constitué de profilés (17).

15. Dispositif de ventilation (1) selon l'une des revendications 9 à 13 et la revendication 14, **caractérisé en ce que** les éléments couvercles (12, 14, 15, 16) sont réalisés sous la forme de profilés (12, 14, 15, 16).
